(19) **Europäisches Patentamt / European Patent Office / Office européen des brevets**

(11) **EP 2 757 007 B1**

(12) **EUROPEAN PATENT SPECIFICATION**

(45) Date of publication and mention
of the grant of the patent:
**07.03.2018 Bulletin 2018/10**

(51) Int Cl.:
*B60T 8/1755* (2006.01)    *B60W 40/101* (2012.01)

(21) Application number: **13151736.9**

(22) Date of filing: **17.01.2013**

(54) **A vehicle safety system**

Fahrzeugsicherheitssystem

Système de sécurité de véhicule

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.07.2014 Bulletin 2014/30**

(73) Proprietor: **Autoliv Development AB**
**447 83 Vårgårda (SE)**

(72) Inventor: **Laoufi, Moroine**
**92600 Asnieres-sur-Siene (FR)**

(74) Representative: **Beattie, Alex Thomas Stewart**
**Forresters IP LLP**
**Skygarden**
**Erika-Mann-Strasse 11**
**80636 München (DE)**

(56) References cited:
**WO-A2-92/05987          DE-A1- 10 009 921**
**DE-A1- 19 617 590       US-A1- 2010 131 145**
**US-A1- 2011 106 458**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

THIS INVENTION relates to a vehicle safety system, and in particular a system to estimate or predict when loss of traction between a vehicle's tyres and the road surface may occur.

The coefficient of friction between the tyres of a vehicle and the road surface can vary significantly depending on factors such as the material from which the road surface is made, the temperature of the tyres, the temperature of the road surface, and the presence of rain, ice or snow. The coefficient of friction between the tyres and the road surface will dictate the maximum lateral force that may act between the vehicle and the road surface before the tyres slip with respect to the road surface.

Many vehicles are able to determine when a slip of this nature takes place, but of course it is desirable to be able to predict the maximum lateral force that can be applied before the tyres begin to slip. US2011/0106458 discloses a method of estimating the coefficient of friction between a vehicle's tyres and the road surface through analysing the relationship between the lateral force between the vehicle and the road and the slip angle of the vehicle's tyres (the slip angle is discussed in more detail below).

It is an object of the present invention to estimate, in a reliable manner, the point at which a vehicle will slip laterally with respect to the road, preferably without involving excessive computation.

Accordingly, one aspect of the present invention provides a vehicle safety system comprising: a force determining arrangement to detect or calculate a lateral force acting on at least one wheel of the vehicle; a slip angle measuring arrangement to measure the slip angle of the at least one wheel of the vehicle; and a processor arranged to receive signals from the force determining arrangement and the slip angle measuring arrangement, and to analyse the signals to determine a relationship between the lateral force acting on the vehicle and the slip angle of the at least one wheel, wherein the processor is configured to: determine a first range of values of lateral force over which the relationship is substantially linear, and to determine a second range of values of lateral force over which the relationship is substantially non-linear, the second range of values being higher than the first range of values; determine a transition value or range of values at the boundary between the first range of values and the second range of values, at which the relationship changes from being substantially linear to being substantially non-linear; and estimate a slip value of lateral force acting on the vehicle, at which slip will occur between the at least one wheel and a surface over which the vehicle is travelling, the slip value being estimated by multiplying the transition value or range of values by a predetermined factor.

Advantageously, the safety system is adapted to activate an occupant protection or restraint system if it is determined that the lateral force acting on the vehicle is close to or equal to the slip value.

Preferably, the safety system is adapted to activate an automatic braking system of the vehicle, to reduce the vehicle's speed, if it is determined that the lateral force acting on the vehicle is close to or equal to the slip value.

Conveniently, the predetermined factor is about 2.

Advantageously, the predetermined factor is 2.

Preferably, signals are received at the processor from the force determining arrangement and the slip angle measuring arrangement substantially continuously or at regular intervals.

Conveniently, the processor determines a ratio between the lateral force and the slip angle.

Advantageously, the processor determines a ratio between the rate of change of the lateral force and the rate of change of the slip angle, or the rate of change of the ratio between the lateral force and the slip angle.

Preferably, a new slip value is calculated if it is determined that the relationship between lateral force and slip value has changed, indicating that the value of lateral force or slip angle at which slip will occur between the at least one wheel and a surface over which the vehicle is travelling has changed.

Conveniently, a new slip value is calculated at predetermined intervals.

Advantageously, the safety system further comprises a sensor to sense the angle at which a steering wheel of the vehicle is turned.

Preferably, the safety system further comprises one or more accelerometers positioned to sense one or more of: the lateral acceleration: the longitudinal acceleration; the yaw rate; and the rate of change of yaw rate, of the vehicle.

Another aspect of the present invention provides a vehicle incorporating a safety system according to any preceding claim.

In order that the present invention may be more readily understood embodiments thereof will now be described, by way of example, with reference to the accompanying drawings, in which:

Figure 1 is a schematic view of a vehicle incorporating a safety system embodying the present invention;

Figure 2 is a force vector diagram; and

Figure 3 is a graph of slip angle and lateral force.

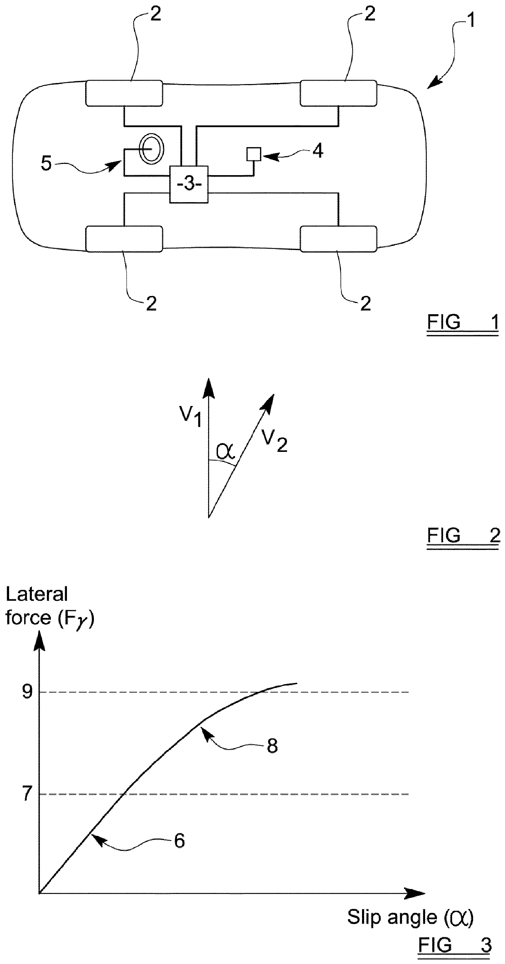

Figure 1 is a schematic view of a vehicle 1 incorporating a safety system embodying the present invention. The vehicle 1 has four tyres 2, and in the depicted embodiment each tyre 2 has a sensor (not shown) which is adapted to measure the lateral force acting on the tyre 2 (i.e. the force acting in a direction which is substantially perpendicular to the plane of the tyre 2).

The tyre sensors are each connected to a control unit 3, which includes (or is connected to) an on-board processor.

One or more motion sensors 4 are also incorporated into the vehicle 1. The motion sensors 4 may include (but are not limited to) accelerometers and gyroscopes. The motion sensors 4 may measure linear acceleration in the longitudinal and lateral directions (i.e. parallel with and perpendicular to the normal forward direction of travel of the vehicle 1), and also the rate (or rate of change) of yaw of the vehicle 1. Some or all of the motion sensors 4 may, in preferred embodiments, be located at or near the centre of gravity of the vehicle 1.

The vehicle 1 further incorporates a steering wheel 5, which can be operated by the driver to steer the vehicle 1 in the normal manner. A steering angle sensor (not shown) detects the steering angle of the steering wheel 5, and passes this information to the control unit 3.

Signals from the various sensors may be sent to the control unit 3 substantially continuously, or at set intervals, which may be (for example) every 0.1 seconds, every 1 second, or every 5 seconds.

For the purposes of the invention it is desirable to calculate the slip angle of at least one of the vehicle's tyres 2. The slip angle is generally defined as the angle between the direction in which the wheel 2 is pointing and the direction in which it is actually travelling. With reference to figure 2, a first vector V1 represents the direction in which a wheel is pointing, and a second vector V2 represents the direction in which the wheel is travelling. The slip angle $\alpha$ is indicated between these two vectors.

With reference to figure 3, a typical characteristic curve for a vehicle tyre is shown. In this figure, the x-axis represents the slip angle, and the y-axis represents the lateral force which acts on the tyre.

It can be seen that, at relatively low levels of lateral force, there is a substantially linear relationship between the lateral force and the slip angle. This linear region is indicated by 6 in figure 3. After a first threshold 7 of lateral force has been exceeded, the relationship between the lateral force and the slip angle becomes substantially non-linear, with the slip angle increasing at a greater rate with respect to lateral force. This non-linear region is indicated by 8 in figure 3.

When the lateral force reaches a further threshold 9, the tyre will slip with respect to the road surface. This point is known as "loss of adhesion" (LoA).

It cannot be positively determined that the LoA point has been reached until slip between a tyre and the road surface actually occurs. Clearly, it is desirable to avoid this occurring, and therefore to be able to estimate the LoA point reliably at lower values of lateral force and/or slip angle.

Through analysis of characteristic curves for different tyres, it has been discovered that the threshold 7 at which the relationship between lateral force and slip angle changes from being linear to being non-linear occurs at a value of lateral force which is approximately half of the value of lateral force at which LoA will occur.

It is therefore proposed to estimate the lateral force or slip angle at which LoA will occur by observing the relationship between applied force and slip angle, and noting the point (i.e. the threshold 7 discussed above) at which the relationship changes from being substantially linear to being substantially non-linear. The value of applied force at which this occurs is then doubled to estimate the value of applied force at which LoA will occur.

In the embodiments of the invention, the threshold value of applied force is multiplied by a factor other than 2 to estimate the value of applied force at which LoA will occur. For instance, the threshold value of applied force may be multiplied by 1.5, 1.75, 1.8, 1.9, 2.1, 2.2, 2.25 or 2.5. An appropriate scaling factor may be generated through experimentation, calculation, trial and error and so on. However, in general it is proposed in this invention to multiply the threshold value of force (or slip angle) by a scaling factor to estimate the slip value of applied lateral force (or slip angle) at which LoA will occur.

A proposed method for investigating the relationship between applied force and slip angle is discussed below.

Turning firstly to the slip angle, as discussed above the slip angle is the angle between the direction in which a wheel is pointing and the direction in which the wheel is travelling.

The slip angle for the front wheels may be calculated using the following equation:

$$\alpha_f = SSA + \frac{YR \cdot a}{V_x} - RWA$$

in which SSA represents the side slip angle, YR represents the yaw rate, a represents the longitudinal distance between the front axle and the vehicle's centre of gravity, $V_x$ represents the speed of the vehicle in the "forward" direction, and RWA represents the angle at which the front wheels are turned with respect to the "straight forward" direction (the "road wheel angle").

The slip angle at the rear axle may be calculated using a similar formula:

$$\alpha_r = SSA - \frac{YR \cdot b}{V_x}$$

in which b represents the longitudinal distance between the rear axle and the vehicle's centre of gravity. It will be understood that this formula 11 is simpler than that used to calculate the slip angle for the front wheels because (in this example), the rear wheels are fixed and do not steer.

The lateral force acting on the front axle may be calculated using the following formula:

$$Fy_f = \frac{\dot{Y}R \cdot I_{zz} + m \cdot b \cdot A_y}{L}$$

in which $I_{zz}$ represents the moment of inertia of the vehicle about its z-axis, m represents the mass of the vehicle, b again represents the distance from the vehicle's centre of gravity to the rear axle, Ay represents the lateral acceleration of the vehicle, and L represents the length of the vehicle's wheel base.

The lateral force acting on the rear axle may similarly be calculated using the following formula:

$$Fy_r = m \cdot A_y - Fy_f$$

The lateral forces acting on each wheel may also be calculated through the force sensors discussed above, which may be provided for each wheel or for the front and rear axles respectively. These force sensors may, for example, comprise piezo electric elements which are positioned to be placed under tension or compression when lateral forces act on the wheels, axles or one or more other components.

The lateral force and slip angle can be calculated continuously or at intervals, the relationship between these two values can be monitored by the processor as the vehicle is driven. In particular, the ratio between the lateral force and the slip angle (i.e. dF/dα) may be calculated at various times to build up a graph similar to that shown in figure 3. As will be understood from the discussion above of the characteristic curve, there will be a range of lower values within which the relationship will be substantially linear (i.e. dF/dα is approximately constant) and a higher range of values over which the relationship will be substantially non-linear (i.e. dF/dα varies with increasing force/slip angle). As discussed above, the value of applied force or slip angle at which this transition occurs is calculated by applying a scaling factor to the threshold value between the linear and non-linear regions, and on this basis the value of applied force or slip angle at which LoA will occur is estimated. Alternatively, or in addition, a ratio is established between the rate of change with respect to time of lateral force and the rate of change with respect to time of slip angle:

$$\frac{\partial Fy_f}{\partial \alpha_f} = \frac{dFy_f/dt}{d\alpha_f/dt}$$

This effectively gives a measure of the rate of change of the relationship between applied force and slip angle. It will be understood that, if the vehicle remains in the region over which the relationship between applied force and slip angle is substantially linear, the rate of change of the relationship between applied force and slip angle will be substantially zero. It should be noted that the actual value of the ratio of applied force to slip angle will vary depending on the road conditions. However, the fact that the ratio does not change over time indicates that the vehicle is in the linear region.

However, if the ratio does change with respect to time, this is an indication that the vehicle is in the non-linear region.

In the embodiments of the invention the processor may determine that the vehicle is in the non-linear region if the absolute value of applied force or slip angle is above the determined threshold, and the rate of change of the ratio between applied force and slip angle is above a further threshold.

It will be understood that supplying both of these thresholds will lead to a more robust determination that the vehicle is in the non-linear region.

As discussed above, while the characteristic curve for a tyre contains a substantially linear region and a substantially non-linear region, the slope of the substantially non-linear region will vary depending on the surface on which the vehicle is driving, external conditions such as ground water, frost or humidity, and also the temperature and condition of the tyres. If the vehicle moves from one type of surface to another, the relationship between slip angle and lateral force may change abruptly (as, of course, could the conditions under which LoA will occur).

As discussed above the estimated value of lateral force and/or slip angle at which LoA will occur is calculated as the vehicle is driven, and this value is preferably stored in a memory for reference.

However, in preferred embodiments the processor is able to determine when the relationship between calculated values of slip angle and lateral force are no longer consistent with the stored value. For instance, it may be determined that the ratio between slip angle and lateral force is relatively constant, but is different to the ratio that has been previously calculated in the substantially linear region. As a further example, it may be determined that the change from a substantially linear region to a substantially non-linear region occurs at a significantly different value of lateral force or slip angle to that previously calculated.

If the processor determines that the relationship between slip angle and lateral force appears to have changed, the stored value for estimated LoA may be discarded, and a new value calculated from incoming data.

Alternatively, or in addition, a new estimated value for LoA may be calculated at regular intervals. These intervals may be at around 1 minute, 30 seconds or 10 seconds. The intervals may be more or less than this, however.

In embodiments the value of lateral force or slip angle may not be considered if it is determined that the vehicle is being driven straight forward, or nearly straight forward, and therefore that slippage is very unlikely. For instance, a minimum threshold for yaw rate, lateral acceleration, lateral force or slip angle may be applied.

Once the value of applied force and/or slip angle at which LoA is expected to occur has been calculated, the processor may take action to protect the occupant of a vehicle based on this information.

For instance, as the value of applied force and/or slip angle approaches the point at which LoA is expected, automatic vehicle braking may be applied, to reduce the speed of the vehicle.

Occupant restraint systems, such as a seat belt pre-tensioner, may also be activated to restrain the occupant if it appears that LoA is imminent.

A determination that the vehicle is at or close to the point of LoA may also be used to influence the algorithms used for triggering of occupant protection systems such as air-bags. For instance, if the vehicle slips sideways with respect to the road surface, it may be expected that a side air-bag (such as an inflatable curtain (IC)-type air-bag) may be required to protect the occupant. One or more thresholds for triggering an IC air-bag may therefore be lowered, or a different triggering algorithm may be applied.

It will be understood that the present invention provides a robust and reliable method for estimating when a vehicle is likely to lose traction with a road surface, before loss of traction actually occurs.

**Claims**

1. A vehicle safety system comprising:

    a force determining arrangement to detect or calculate a lateral force acting on at least one wheel (2) of the vehicle (1);
    a slip angle measuring arrangement to measure the slip angle of the at least one wheel (2) of the vehicle (1); and
    a processor (3) arranged to receive signals from the force determining arrangement and the slip angle measuring arrangement, and to analyse the signals to determine a relationship between the lateral force acting on the vehicle (1) and the slip angle of the at least one wheel (2), wherein the processor is configured to:

        determine a first range of values of lateral force over which the relationship is substantially linear, and to determine a second range of values of lateral force over which the relationship is substantially non-linear, the second range of values being higher than the first range of values;
        determine a transition value or range of values at the boundary between the first range of values and the second range of values, at which the relationship changes from being substantially linear to being substantially non-linear;
    **characterized in that** the processor is further configured to
    estimate a slip value of lateral force acting on the vehicle, at which slip will occur between the at least one wheel (2) and a surface over which the vehicle (1) is travelling, the slip value being estimated by multiplying the transition value or range of values by a predetermined factor.

2. A safety system according to claim 1, adapted to activate an occupant protection or restraint system if it is determined that the lateral force acting on the vehicle (1) is close to or equal to the slip value.

3. A safety system according to claim 1 or 2, adapted to activate an automatic braking system of the vehicle (1), to reduce the vehicle's speed, if it is determined that the lateral force acting on the vehicle (1) is close to or equal to the slip value.

4. A safety system according to any preceding claim, wherein the predetermined factor is about 2.

5. A safety system according to claim 4, wherein the predetermined factor is 2.

6. A safety system according to any preceding claim, wherein signals are received at the processor (3) from the force detection arrangement and the slip angle measuring arrangement substantially continuously or at regular intervals.

7. A safety system according to any preceding claim wherein the processor (3) determines a ratio between the lateral force and the slip angle.

8. A safety system according to any preceding claim wherein the processor (3) determines a ratio between the rate of change of the lateral force and the rate of change of the slip angle, or the rate of change of the ratio between the lateral force and the slip angle.

9. A safety system according to any preceding claim wherein a new slip value is calculated if it is determined that the relationship between lateral force and slip value has changed, indicating that the value of lateral force or slip angle at which slip will occur between the at least one wheel (2) and a surface over which the vehicle (1) is travelling has changed.

10. A safety system according to any preceding claim wherein a new slip value is calculated at predetermined intervals.

**11.** A safety system according to any preceding claim further comprising a sensor to sense the angle at which a steering wheel (5) of the vehicle (1) is turned.

**12.** A safety system according to any preceding claim further comprising one or more accelerometers (4) positioned to sense one or more of: the lateral acceleration: the longitudinal acceleration; the yaw rate; and the rate of change of yaw rate, of the vehicle (1).

**13.** A vehicle (1) incorporating a safety system according to any preceding claim.


**Patentansprüche**

**1.** Fahrzeugsicherheitssystem, umfassend:

eine Kraftermittlungsanordnung zum Erfassen oder Berechnen einer auf mindestens ein Rad (2) des Fahrzeugs (1) wirkenden Seitenkraft; eine Schlupfwinkel-Messanordnung zum Messen des Schlupfwinkels des mindestens einen Rads (2) des Fahrzeugs (1); und einen Prozessor (3), der so angeordnet ist, dass er Signale von der Kraftermittlungsanordnung und der Schlupfwinkel-Messanordnung empfängt, und dass er die Signale zur Ermittlung einer Beziehung zwischen der auf das Fahrzeug (1) wirkenden Seitenkraft und dem Schlupfwinkel des mindestens einen Rads (2) analysiert, wobei der Prozessor so eingerichtet ist, dass er:

einen ersten Seitenkraft-Wertebereich ermittelt, über den die Beziehung im Wesentlichen linear ist, und einen zweiten Seitenkraft-Wertebereich ermittelt, über den die Beziehung im Wesentlichen nicht linear ist, wobei der zweite Wertebereich höher ist als der erste Wertebereich; einen Übergangswert oder Übergangswertebereich an der Grenze zwischen dem ersten Wertebereich und dem zweiten Wertebereich ermittelt, an der sich die Beziehung von im Wesentlichen linear zu im Wesentlichen nicht linear ändert;

**dadurch gekennzeichnet, dass** der Prozessor ferner so ausgelegt ist, dass er:

einen Schlupfwert der auf das Fahrzeug wirkenden Seitenkraft errechnet, bei der zwischen dem mindestens einen Rad (2) und einer Fläche, über die das Fahrzeug (1) fährt, Schlupf auftritt, wobei der Schlupfwert durch Multiplizieren des Übergangswerts oder Übergangswertebereichs mit einem vorgegebenen Faktor errechnet wird.

**2.** Sicherheitssystem nach Anspruch 1, das so ausgelegt ist, dass es ein Insassenschutz- oder Insassenrückhaltesystem aktiviert, wenn festgestellt wird, dass die auf das Fahrzeug (1) wirkende Seitenkraft ähnlich oder gleich dem Schlupfwert ist.

**3.** Sicherheitssystem nach Anspruch 1 oder 2, das so ausgelegt ist, dass es ein automatisches Bremssystem des Fahrzeugs (1) aktiviert, damit die Fahrzeuggeschwindigkeit verringert wird, wenn festgestellt wird, dass die auf das Fahrzeug (1) wirkende Seitenkraft ähnlich oder gleich dem Schlupfwert ist.

**4.** Sicherheitssystem nach einem der vorhergehenden Ansprüche, wobei der vorgegebene Faktor ungefähr 2 beträgt.

**5.** Sicherheitssystem nach Anspruch 4, wobei der vorgegebene Faktor 2 beträgt.

**6.** Sicherheitssystem nach einem der vorhergehenden Ansprüche, wobei Signale von der Krafterfassungsanordnung und der Schlupfwinkel-Messanordnung am Prozessor (3) im Wesentlichen kontinuierlich oder in regelmäßigen Abständen empfangen werden.

**7.** Sicherheitssystem nach einem der vorhergehenden Ansprüche, wobei der Prozessor (3) ein Verhältnis zwischen der Seitenkraft und dem Schlupfwinkel ermittelt.

**8.** Sicherheitssystem nach einem der vorhergehenden Ansprüche, wobei der Prozessor (3) ein Verhältnis zwischen der Änderungsgeschwindigkeit der Seitenkraft und der Änderungsgeschwindigkeit des Schlupfwinkels oder die Änderungsgeschwindigkeit des Verhältnisses zwischen der Seitenkraft und dem Schlupfwinkel ermittelt.

**9.** Sicherheitssystem nach einem der vorhergehenden Ansprüche, wobei ein neuer Schlupfwert berechnet wird, wenn festgestellt wird, dass sich die Beziehung zwischen Seitenkraft und Schlupfwert verändert hat, womit angezeigt wird, dass sich der Wert der Seitenkraft oder des Schlupfwinkels verändert hat, bei dem zwischen dem mindestens einen Rad (2) und einer Fläche, über die das Fahrzeug (1) fährt, Schlupf auftritt.

**10.** Sicherheitssystem nach einem der vorhergehenden Ansprüche, wobei ein neuer Schlupfwert in vorgegebenen Abständen berechnet wird.

**11.** Sicherheitssystem nach einem der vorhergehenden Ansprüche, das ferner einen Sensor zum Erfassen des Winkels umfasst, um den ein Lenkrad (5) des Fahrzeugs (1) eingeschlagen wird.

12. Sicherheitssystem nach einem der vorhergehenden Ansprüche, das ferner einen oder mehrere Beschleunigungsmesser (4) umfasst, die so platziert sind, dass sie mindestens eins aus Folgendem erfassen: die seitliche Beschleunigung, die Längsbeschleunigung, die Gierrate und die Änderungsgeschwindigkeit der Gierrate des Fahrzeugs (1).

13. Fahrzeug (1), in das ein Sicherheitssystem nach einem der vorhergehenden Ansprüche integriert ist.


**Revendications**

1. Système de sécurité de véhicule, comprenant :

un agencement de détermination de force destiné à détecter ou calculer une force latérale agissant sur au moins une roue (2) du véhicule (1) ;
un agencement de mesure d'angle de dérapage destiné à mesurer l'angle de dérapage de l'au moins une roue (2) du véhicule (1) ; et
un processeur (3) agencé pour recevoir des signaux provenant de l'agencement de détermination de force et de l'agencement de mesure d'angle de dérapage, et pour analyser les signaux afin de déterminer une relation entre la force latérale agissant sur le véhicule (1) et l'angle de dérapage de l'au moins une roue (2), le processeur étant configuré pour :

déterminer une première plage de valeurs de force latérale dans laquelle la relation est sensiblement linéaire, et déterminer une seconde plage de valeurs de force latérale dans laquelle la relation est sensiblement non linéaire, la seconde plage de valeurs étant supérieure à la première plage de valeurs ;
déterminer une valeur ou une plage de valeurs de transition à la limite entre la première plage de valeurs et la seconde plage de valeurs, à laquelle la relation passe de sensiblement linéaire à sensiblement non linéaire ;
**caractérisé en ce que** le processeur est en outre configuré pour :

estimer une valeur de dérapage de force latérale agissant sur le véhicule, à laquelle un dérapage se produira entre l'au moins une roue (2) et une surface sur laquelle le véhicule (1) circule, la valeur de dérapage étant estimée en multipliant la valeur ou la plage de valeurs de transition par un facteur prédéfini.

2. Système de sécurité selon la revendication 1, adapté pour activer un système de protection ou de retenue d'occupant s'il est déterminé que la force latérale agissant sur le véhicule (1) est proche de ou égale à la valeur de dérapage.

3. Système de sécurité selon la revendication 1 ou 2, adapté pour activer un système de freinage automatique du véhicule (1), afin de réduire la vitesse du véhicule, s'il est déterminé que la force latérale agissant sur le véhicule (1) est proche de ou égale à la valeur de dérapage.

4. Système de sécurité selon l'une quelconque des revendications précédentes, dans lequel le facteur prédéfini est environ 2.

5. Système de sécurité selon la revendication 4, dans lequel le facteur prédéfini est 2.

6. Système de sécurité selon l'une quelconque des revendications précédentes, dans lequel des signaux provenant de l'agencement de détection de force et de l'agencement de mesure d'angle de dérapage sont reçus sur le processeur (3) sensiblement en continu ou à intervalles réguliers.

7. Système de sécurité selon l'une quelconque des revendications précédentes, dans lequel le processeur (3) détermine un rapport entre la force latérale et l'angle de dérapage.

8. Système de sécurité selon l'une quelconque des revendications précédentes, dans lequel le processeur (3) détermine un rapport entre la vitesse du changement de la force latérale et la vitesse du changement de l'angle de dérapage, ou la vitesse du changement du rapport entre la force latérale et l'angle de dérapage.

9. Système de sécurité selon l'une quelconque des revendications précédentes, dans lequel une nouvelle valeur de dérapage est calculée s'il est déterminé que la relation entre la force latérale et la valeur de dérapage a changé, indiquant que la valeur de force latérale ou d'angle de dérapage à laquelle le dérapage se produira entre l'au moins une roue (2) et une surface sur laquelle le véhicule (1) circule a changé.

10. Système de sécurité selon l'une quelconque des revendications précédentes, dans lequel une nouvelle valeur de dérapage est calculée à des intervalles prédéfinis.

**11.** Système de sécurité selon l'une quelconque des revendications précédentes, comprenant en outre un capteur destiné à détecter l'angle auquel un volant de direction (5) du véhicule (1) est tourné.

**12.** Système de sécurité selon l'une quelconque des revendications précédentes, comprenant en outre un ou plusieurs accéléromètres (4) positionnés pour capter une ou plusieurs valeurs parmi : l'accélération latérale ; l'accélération longitudinale ; la vitesse de lacet et la vitesse du changement de vitesse de lacet, du véhicule (1).

**13.** Véhicule (1) intégrant un système de sécurité selon l'une quelconque des revendications précédentes.

FIG    1

FIG    2

FIG    3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110106458 A